# EUROPEAN PATENT APPLICATION

(11) **EP 4 621 956 A1**
(43) Date of publication of application: **24.09.2025**
(21) Application number: 24201303.5
(22) Date of filing: 19.09.2024
(51) Int. Cl.: H01M 50/213, A62C 3/16, H01M 50/383, H01M 50/271, H01M 50/289, H01M 50/367

(54) **BATTERY PACK**

(30) Priority: 19.03.2024 KR 20240037767
(71) Applicant: SAMSUNG SDI CO., LTD., Giheung-gu Yongin-si, Gyeonggi-do 17084 (KR)
(72) Inventor: HWANG, Ho Ryong, 16678 Suwon-si (KR)
(74) Representative: Marks & Clerk LLP

(57) **Abstract**

A battery pack includes a housing, a plurality of battery cells in the housing and each having a vent hole, a chamber between the housing and the vent hole, a separation member in the chamber and configured to divide the chamber into a plurality of unit chambers, and a plurality of fire-extinguishing members each located in a unit chamber of the plurality of unit chambers and configured to supply a fire-extinguishing material to the battery cells.

## Description

### BACKGROUND

### 1. Field

Aspects of embodiments of the present disclosure relate to a battery pack.

### 2. Discussion of Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.

The secondary battery may be used as a battery pack formed of a plurality of unit battery cells connected in series and/or parallel to provide a high energy density. The battery pack may be formed by connecting electrode terminals of a plurality of unit batteries to each other to meet a desired amount of power and, for example, to implement a high-power secondary battery for an electric vehicle.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery pack capable of improving fire-extinguishing efficiency if a battery cell ignites is provided.

The above and other aspects and features of the present disclosure will be described in or will be apparent from the following description of some embodiments of the present disclosure.

According to one or more embodiments of the present disclosure, a battery pack includes a housing, a plurality of battery cells in the housing and having a vent hole, a chamber between the housing and the vent hole, a separation member in the chamber and configured to divide the chamber into a plurality of unit chambers, and a plurality of fire-extinguishing members each located in a unit chamber of the plurality of unit chambers and configured to supply a fire-extinguishing material to the battery cells.

The separation member may include a plurality of partitions extending from the housing and arranged between the unit chambers adjacent to each other.

The battery pack may further include a first holder between the chamber and the battery cells and configured to support the partitions.

The battery pack may further include a second holder spaced apart from the first holder and configured to support the battery cells.

The first holder may include a first holder body seated on the battery cells, a transfer hole passing through the first holder body and facing the vent hole, and a first alignment member extending from the first holder body and inserted between the adjacent battery cells.

The partition may include a first end portion connected to the housing and a second end portion opposite to the first end portion, and the second end portion may be fixed to the first holder body.

The first holder may further include a fixing member connected to the first holder body and configured to support the second end portion.

The fixing member may include a fixing body extending from the first holder body, and a fixing groove which is in the fixing body and in which the second end portion is inserted.

The fixing body may have a cross-sectional area that increases toward the first holder body.

The fixing member may further include a sealing member in the fixing groove and configured to seal a space between the second end portion and the fixing body.

The sealing member may be elastically deformable.

The battery pack may further include a guide in the unit chamber and configured to guide a flow of an emission discharged from the vent hole toward the fire-extinguishing member.

The guide may include an inclined surface extending to be inclined from the partition toward the housing.

The fire-extinguishing member may be fixed to the housing.

The battery pack may further include a seating groove facing the unit chamber and concavely recessed into the housing, and the fire-extinguishing member may be inserted in the seating groove.

The housing may include a first region facing the seating groove and a second region around (e.g., surrounding) the first region, and a thickness of the first region may be less than a thickness of the second region.

A ratio of the thickness of the first region to the thickness of the second region may be greater than or equal to 0.3 and less than or equal to 0.5.

The first region may be configured to rupture in response to an increase in pressure or temperature of the unit chamber.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is an exploded perspective view schematically illustrating a configuration of a battery pack according to an embodiment of the present disclosure;
FIG. 2 is a cross-sectional view schematically illustrating a configuration of the battery pack of FIG. 1;
FIG. 3 is a perspective view schematically illustrating a configuration of a battery cell according to an embodiment of the present disclosure;
FIG. 4 is a cross-sectional view schematically illustrating a configuration of the battery cell of FIG. 3;
FIG. 5 is a view schematically illustrating an operating state of the battery pack of FIG. 1;
FIG. 6 is a cross-sectional view schematically illustrating a configuration of a battery pack according to another embodiment of the present disclosure;
FIG. 7 is an enlarged view schematically illustrating a configuration of a guide member of the battery pack of FIG. 6;
FIG. 8 is a view schematically illustrating an operation of guiding emissions by the guide member of FIG. 7;
FIG. 9 is a cross-sectional view schematically illustrating a configuration of a battery pack according to another embodiment of the present disclosure;
FIG. 10 is an enlarged view schematically illustrating a configuration of a fixing member of the battery pack of FIG. 9;
FIG. 11 is a view illustrating another example of a fixing body illustrated in FIG. 10;
FIG. 12 is a view schematically illustrating a configuration of a fixing member according to another embodiment of the present disclosure;
FIG. 13 is a cross-sectional view schematically illustrating a configuration of a battery pack according to another embodiment of the present disclosure;
FIG. 14 is a view schematically illustrating a configuration of a seating groove of the battery pack of FIG. 13; and
FIGS. 15 and 16 are views schematically illustrating an operation of the battery pack of FIG. 13.

### DETAILED DESCRIPTION

Herein, some embodiments of the present disclosure will be described, in further detail, with reference to the accompanying drawings. The terms or words used in this specification and claims are not be construed as being limited to the usual or dictionary meaning and are to be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

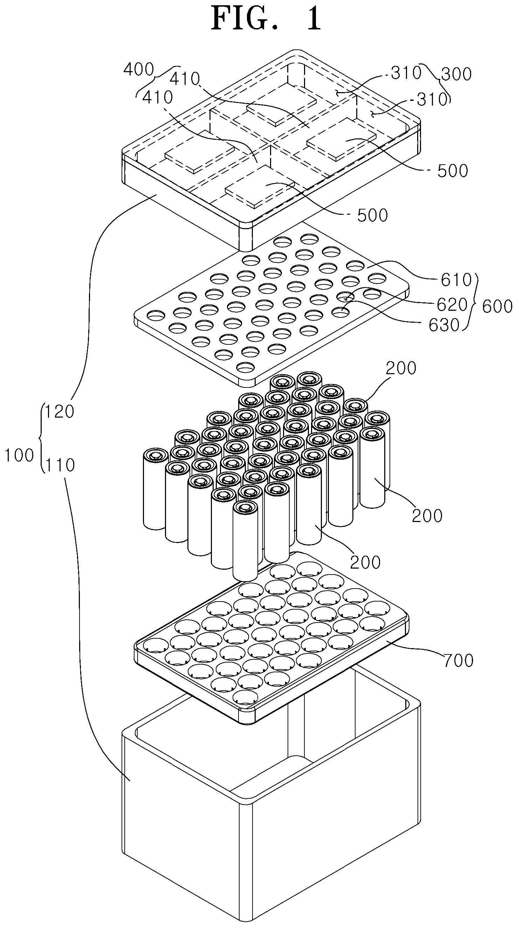

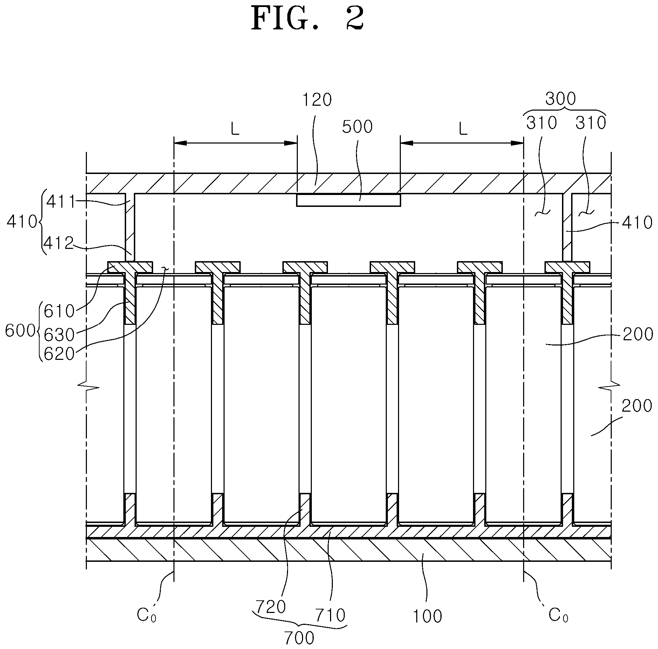

FIG. 1 is a perspective view schematically illustrating a configuration of a battery pack according to an embodiment of the present disclosure; and FIG. 2 is a cross-sectional view schematically illustrating a configuration of the battery pack of FIG. 1.

Referring to FIGS. 1 and 2, a battery pack according to the present embodiment includes a housing 100, a battery cell 200, a chamber 300, a separation member 400, and a fire-extinguishing member 500.

The housing 100 may form a general appearance of the battery pack and provide a space in which the battery cell 200 may be accommodated.

The housing 100 may include a housing body 110 and a cover 120.

The housing body 110 may be formed to have the shape of a box with a hollow interior and an open side. The open side of the housing body 110 may be disposed to face upward. However, a cross-sectional shape of the housing body 110 is not limited to a quadrangular shape, as shown in FIG. 1, and may be varied in design to have any of various shapes, such as a polygonal shape, a circular shape, and an oval shape.

The cover 120 may be coupled to the housing body 110 and may close an internal space of the housing body 110. As an example, the cover 120 may be formed to have a generally plate shape and may be disposed to face the open side of the housing body 110, that is, an upper side of the housing body 110. The cover 120 may be fixed to the housing body 110 by any of various types of coupling methods, such as bolting, welding, fitting, and the like. In an embodiment, a thickness of the cover 120 may be equal to a thickness of the housing body 110.

The battery cell 200 may function as a unit structure, which stores and supplies power, in the battery pack.

Herein, a case in which the battery cell 200 is a lithium-ion secondary battery and has a cylindrical shape will be described as an example. However, the present disclosure is not limited thereto, and the battery cell 200 may be a lithium-polymer battery or a prismatic-type battery, for example.

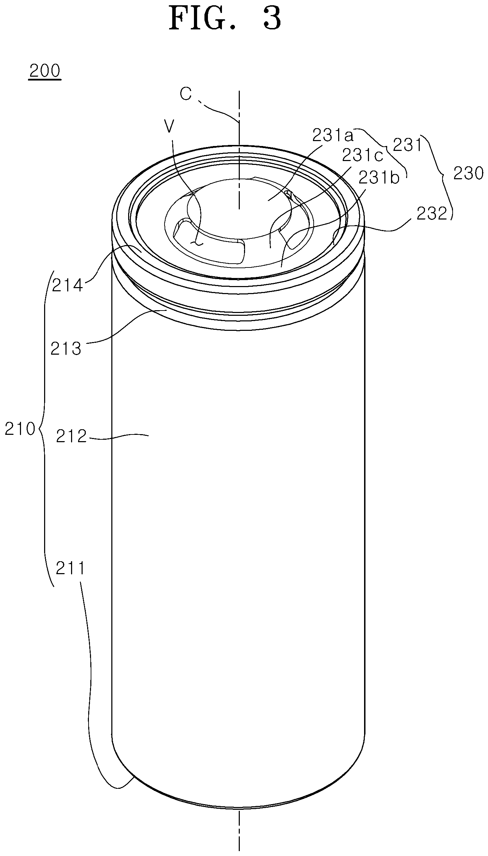

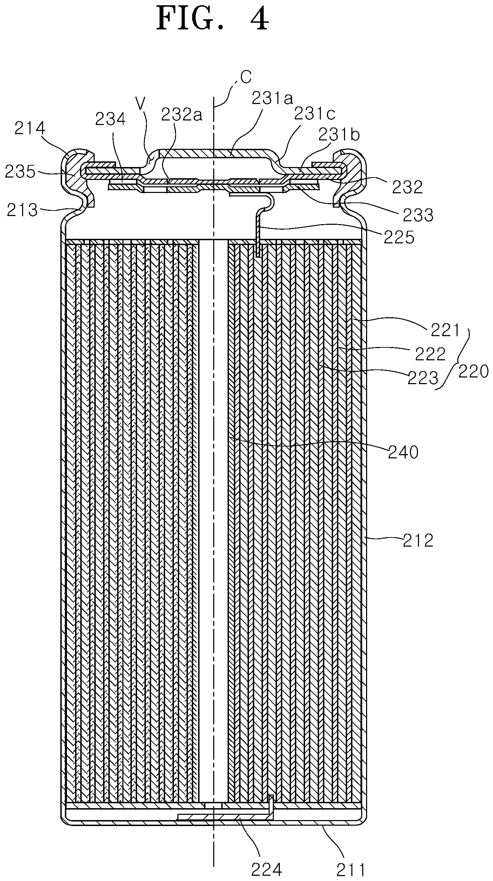

FIG. 3 is a perspective view schematically illustrating a configuration of the battery cell according to an embodiment of the present disclosure; and FIG. 4 is a cross-sectional view schematically illustrating a configuration of the battery cell of FIG. 3.

Referring to FIGS. 3 and 4, the battery cell 200 may include a cell case 210, an electrode assembly 220, and a cap assembly 230.

In an embodiment, the cell case 210 may include a bottom part 211 with a generally circular shape and a side wall 212 extending a certain length upward from the bottom part 211. In an embodiment, the cell case 210 may be made of steel, a steel alloy, nickel-plated steel, a nickel-plated steel alloy, aluminum, or an aluminum alloy.

During an assembly process of the battery cell 200, an upper portion of the cell case 210 may be open. In an embodiment, during the assembly process of the battery cell 200, the electrode assembly 220 may be integrated into one structure and inserted into the cell case 210. Thereafter, an electrolyte may be additionally injected into the cell case 210.

A beading part 213 recessed in a direction of a central axis of the cap assembly 230 may be formed on an upper side of the cell case 210 to prevent or substantially prevent the cap assembly 230 from being separated to the outside. The beading part 213 may be disposed below the cap assembly 230. A crimping part 214 bent around (e.g., to surround) an edge of the cap assembly 230 may be formed above the beading part 213.

The electrode assembly 220 may be accommodated inside the cell case 210. The electrode assembly 220 may include or be referred to as an electrode, an electrode group, or a jelly roll. The electrode assembly 220 may include a negative electrode plate 221 coated with a negative electrode active material (e.g., graphite, carbon, or the like), a positive electrode plate 222 coated with a positive electrode active material (e.g., a transition metal oxide (e.g., LiCoO₂, LiNiO₂, LiMn₂O₄, or the like)), and a separator 223 located between the negative electrode plate 221 and the positive electrode plate 222 to prevent or substantially prevent a short circuit and allow only lithium ions to move. In an embodiment, the negative electrode plate 221, the positive electrode plate 222, and the separator 223 may be wound in a generally cylindrical shape. In some examples, the negative electrode plate 221 may be a copper (Cu) foil, the positive electrode plate 222 may be an aluminum (Al) foil, and the separator 223 may be polyethylene (PE) or polypropylene (PP).

In an embodiment, a negative electrode tab 224 may be welded to the negative electrode plate 221. The negative electrode tab 224 may protrude and extend by a length (e.g., a certain length) downward from the electrode assembly 220. In an embodiment, a positive electrode tab 225 may be welded to the positive electrode plate 222. The positive electrode tab 225 may protrude and extend by a length (e.g., a certain length) upward from the electrode assembly 220. In an embodiment, the negative electrode tab 224 may be made of copper (Cu) or nickel (Ni), and the positive electrode tab 225 may be made of aluminum (Al).

In an embodiment, the negative electrode tab 224 may be welded to the bottom part 211 of the cell case 210. Thus, the cell case 210 may function as a negative electrode. In some examples, the negative electrode tab 224 may be ultrasonically or laser welded to the bottom part 211 of the cell case 210. However, in another example, the positive electrode tab 225 may be welded to the bottom part 211 of the cell case 210, and, in this case, the cell case 210 may function as a positive electrode.

The electrode assembly 220 may further include a center pin 240. In an embodiment, the center pin 240 may have a hollow circular pipe shape and may be coupled to the center or approximately the center of the electrode assembly 220. In an embodiment, the center pin 240 may be made of steel, stainless steel, aluminum, an aluminum alloy, or polybutylene terepthalate, but a material thereof is not limited thereto. The center pin 240 may suppress the deformation of the electrode assembly 220 during charging and discharging of the secondary battery. The center pin 240 may function as a passage through which gas generated inside the secondary battery may move. However, in some examples, the center pin 240 may be omitted.

The cap assembly 230 may seal an opening of the cell case 210 to protect the electrode assembly 220 from an external environment. If an internal pressure of the cell case 210 is higher than a reference pressure, such as due to thermal runaway or ignition of the battery cell 200, the cap assembly 230 may rupture to release an internal gas of the cell case 210 to the outside. In some examples, the cap assembly 230 may function as a positive electrode terminal.

The cap assembly 230 may include a cap-up 231, a vent plate 232, and a cap-down 233.

The cap-up 231 may function as a terminal electrically connected to an external device. In some examples, the cap-up 231 may function as a positive electrode terminal.

A vent hole V may be formed in the cap-up 231. The vent hole V may discharge an internal gas to the outside when an abnormal internal pressure is generated inside the cell case 210 due to overcharging or the like. In an embodiment, the cap-up 231 may be made of aluminum or an aluminum alloy.

As an example, the cap-up 231 may include an inner body 231a, an outer body 231b, and a bridge 231c.

The inner body 231a may form the appearance of a central portion of the cap-up 231. As an example, the inner body 231a may be formed to have a generally disk shape. In an embodiment, the inner body 231a may be disposed such that a central axis thereof is aligned with a central axis C of the cell case 210.

The outer body 231b may form the appearance of an edge of the cap-up 231. As an example, the outer body 231b may be formed to have a generally hollow ring shape. A diameter of the outer body 231b may be greater than a diameter of the inner body 231a. The outer body 231b may be disposed coaxially with the inner body 231a. That is, a central axis of the outer body 231b may be disposed to be aligned with the inner body 231a and the central axis C of the cell case 210.

The inner body 231a and the outer body 231b may be disposed to be vertically spaced apart from each other. As an example, the outer body 231b may be disposed below the inner body 231a. However, in an embodiment, the inner body 231a and the outer body 231b may be disposed in a same plane.

The bridge 231c is disposed between the inner body 231a and the outer body 231b, and may support the inner body 231a with respect to the outer body 231b. In an embodiment, the bridge 231c may be formed to have a bar shape with both, or opposite, end portions connected to an outer circumferential surface of the inner body 231a and an inner circumferential surface of the outer body 231b, respectively. A plurality of bridges 231c may be provided. The plurality of bridges 231c may be arranged to be spaced apart from each other at an interval (e.g., a set interval) along a circumference around the central axis C of the cell case 210. In an embodiment, the interval between the adjacent bridges 231c may be the same.

The vent hole V may be formed to have the shape of a hole formed to pass through the cap-up 231. As an example, the vent hole V may be formed to have a shape of a hole passing through a region between the inner body 231a and the outer body 231b. A plurality of vent holes V may be provided. Each of the plurality of vent holes V may be individually disposed between adjacent bridges 231c of the plurality of bridges 231c. However, a number of the vent holes V is not limited to that shown in FIG. 3, and may be varied in design.

The vent plate 232 may be located below the cap-up 231. The vent plate 232 may be in close contact with, in contact with, coupled to, or connected to a lower portion of the cap-up 231. As an example, the vent plate 232 may be in close contact with, in contact with, coupled to, or connected to an edge of the cap-up 231, such as the outer body 231b, other than the center portion, such as the inner body 231a, that protrudes upward in the cap-up 231. In an embodiment, an end portion of the vent plate 232 may extend in a curved manner to surround an end portion of the outer body 231b. In an embodiment, the vent plate 232 may be made of aluminum or an aluminum alloy.

The vent plate 232 may include a notch 232a. In an embodiment, the notch 232a may be formed to be recessed to a certain depth from an outer side surface of the vent plate 232.

As an internal pressure of the battery cell 200 increases above a reference pressure (or a rupture pressure of the vent plate 232) due to thermal runaway or ignition of the battery cell 200, the notch 232a may rupture, and emissions generated inside the cell case 210 may pass sequentially through the notch 232a and the vent hole V to be discharged to the outside. Here, the emissions discharged from the vent hole V may include at least one of flames, gases, and smoke.

The cap-down 233 may be disposed below the vent plate 232. The cap-down 233 may be in close contact with, in contact with, connected to, or coupled to the vent plate 232. The cap-down 233 may be electrically connected to the electrode assembly 220 through the positive electrode tab 225. The cap-down 233 may be electrically connected to the vent plate 232 and the cap-up 231. In an embodiment, the positive electrode tab 225 of the electrode assembly 220 may be welded to a lower surface of the cap-down 233. In some examples, the lower surface of the cap-down 233 may be ultrasonically and/or laser welded to the positive electrode tab 225. In some examples, the cap-down 233 may be made of aluminum or an aluminum alloy.

In some examples, in the event of thermal runaway or ignition of the battery cell 200, the vent plate 232 may be deformed by the internal pressure of the cell case 210, and the cap-down 233 and the vent plate 232 may be electrically separated from each other.

A first insulating member 234 may be installed between the vent plate 232 and the cap-down 233. The first insulating member 234 may be located between an edge of the vent plate 232 and an edge of the cap-down 233. The first insulating member 234 may insulate between the cap-down 233 and the vent plate 232 if the vent plate 232 is deformed by the internal gas. In some examples, the first insulating member 234 may be formed of a resin material, such as polyethylene (PE), polypropylene (PP), polyethylene terephthalate (PET), or the like, but a material is not limited here.

A second insulating member 235 may be installed on an upper side of the cell case 210. The second insulating member 235 may be located between an end portion of the vent plate 232, which is around (e.g., surrounds) the outer body 231b of the cap-up 231, and the cell case 210. Both, or opposite, sides of the second insulating member 235 may be respectively in close contact with the end portion of the vent plate 232 and inner side surfaces of each of the crimping part 214 and the beading part 213. The second insulating member 235 may insulate between the cell case 210 and the cap assembly 230. The second insulating member 235 may be formed of a resin material, such as polyethylene (PE), polypropylene (PP), polyethylene terephthalate (PET), or the like, but a material is not limited here.

The battery cell 200 may be disposed inside the housing 100. As an example, the battery cell 200 may be disposed in the internal space of the housing body 110. The battery cell 200 may be disposed such that the bottom part 211 faces a bottom surface of the housing body 110 and the vent hole V faces the cover 120. However, the battery cell 200 is not limited thereto, and may be disposed such that the bottom part 211 faces the cover 120 and the vent hole V faces the bottom surface of the housing body 110.

A plurality of battery cells 200 may be provided. In an embodiment, the plurality of battery cells 200 may be disposed parallel to each other in the housing 100. The plurality of battery cells 200 may be disposed in various patterns inside the housing 100, such as a grid shape or a zigzag shape. A number of the battery cells 200 may be variously changed in design depending on a size of the housing 100 or the like.

The chamber 300 may be disposed between the housing 100 and the vent holes V. As an example, the chamber 300 may refer to an empty space formed between the cover 120 and upper end portions of the battery cells 200.

The chamber 300 may include a plurality of unit chambers 310. The unit chambers 310 may respectively refer to regions divided by the separation member 400, which will be described below, in an entire region of the chamber 300. Emissions, which are discharged from the vent hole V in the event of thermal runaway or ignition of the battery cell 200, may flow into the unit chamber 310 facing the corresponding battery cell 200.

The plurality of unit chambers 310 may have the same or different cross-sectional areas and volumes. However, a number of the plurality of unit chambers 310 is not limited to four, as shown in FIG. 1, and may be variously changed in design.

The separation member 400 is disposed inside the chamber 300, and may divide the chamber 300 into the plurality of unit chambers 310. That is, the separation member 400 may spatially separate the unit chambers 310 from each other. Accordingly, the separation member 400 may block emissions flowing into a unit chamber 310 from being transferred to another unit chamber 310.

The separation member 400 may include a partition 410.

The partition 410 may extend from the housing 100. As an example, the partition 410 may be formed to have a shape of a plate extending vertically downward from a lower side surface of an upper part of the cover 120. The partition 410 may include a first end portion 411 connected to the housing 100, i.e., the cover 120, and a second end portion 412 located at an opposite side (opposite end) of the first end portion 411. The second end portion 412 may be disposed to face a region between the battery cells 200.

A plurality of partitions 410 may be provided. Each of the plurality of partitions 410 may be individually disposed between the adjacent unit chambers 310. That is, each partition 410 may be disposed to block a boundary region of a pair of adjacent unit chambers 310. A number and arrangement form of the partitions 410 may be variously changed in design depending on a number, shape, or the like of the unit chambers 310.

The fire-extinguishing member 500 may supply a fire-extinguishing material to the battery cell 200 in the event of thermal runaway or ignition of the battery cell 200. A plurality of fire-extinguishing members 500 may be provided. Each of the fire-extinguishing members 500 may be individually disposed inside a different unit chamber 310.

The fire-extinguishing member 500 may include one or more fire-extinguishing agents selected from the group consisting of alumina trihydrate (ATH, Al₂O₃·3H₂O) and potassium-based fire-extinguishing agents. The potassium-based fire-extinguishing agents may include any of (e.g., any one of) sodium hydrogen carbonate (NaHCO₃), potassium hydrogen carbonate (KHCO₃), ammonium phosphate (NH₄H₂PO₃), and a mixture of potassium hydrogen carbonate (KHCO₃) and urea ((NH₂)₂CO). The fire-extinguishing member 500 may generate fire-extinguishing materials, such as steam (H₂O) and carbon dioxide (CO₂), through a pyrolysis reaction when heated above a temperature (e.g., a set temperature). The steam may suppress flames inside the unit chamber 310, and the carbon dioxide may block the flames from coming into contact with oxygen or the like. However, a material constituting the fire-extinguishing member 500 is not limited thereto, and any suitable material that performs a fire-extinguishing function may be used without limitation.

The fire-extinguishing member 500 may be formed to have a generally sheet shape. The fire-extinguishing member 500 may be fixed to a or the lower side surface of the cover 120. In this case, the fire-extinguishing member 500 may be fixed to the lower side surface of the cover 120 by any of various coupling methods, such as adhesion and/or compression. A cross-sectional shape of the fire-extinguishing member 500 may be varied in design to any of various shapes, such as a circular shape, an elliptical shape, and a polygonal shape, in addition to a quadrangular shape shown in FIG. 1.

In an embodiment, for any one of the unit chambers 310, a distance L from the fire-extinguishing member 500 to a central axis C₀ of the battery cell 200 located in an outermost region of the unit chamber 310 may be 32 mm or less. Here, the battery cell 200 located in the outermost region of the unit chamber 310 may refer to the battery cell 200 that is relatively farthest from the fire-extinguishing member 500 among the plurality of battery cells 200 facing any one of the unit chambers 310. That is, in an embodiment, a central axis of the plurality of battery cells 200 facing one of the unit chambers 310 may either directly pass vertically through the fire-extinguishing member 500 or be spaced within a range of 32 mm or less from an edge of the fire-extinguishing member 500. When a distance between the fire-extinguishing member 500 and the battery cell 200 satisfies the above-described range, the fire-extinguishing member 500 may operate smoothly even if the battery cell 200 located in the outermost region of the unit chamber 310 ignites.

The battery pack according to the present embodiment may further include a first holder 600.

The first holder 600 may be disposed between the chamber 300 and the battery cells 200. The first holder 600 may support the plurality of battery cells 200 and the partitions 410 inside the housing 100.

The first holder 600 may include a first holder body 610, a transfer hole 620, and a first alignment member 630.

The first holder body 610 may be formed to have a shape of a plate that is seated on the battery cells 200. As an example, the first holder body 610 may face the chamber 300 and may be seated on upper side surfaces of the battery cells 200, in each of which the vent hole V is formed.

The transfer hole 620 may be disposed to pass through the first holder body 610 and face the vent hole V. The transfer hole 620 may transfer the emissions discharged from the vent hole V to the chamber 300. The transfer hole 620 may have a shape of a hole that vertically passes through upper and lower portions of the first holder body 610. A cross-sectional area of the transfer hole 620 may be smaller than a cross-sectional area of the battery cell 200. However, a cross-sectional shape of the transfer hole 620 may be varied in design to various shapes other than a circular shape, as shown in FIG. 1.

A plurality of transfer holes 620 may be provided. The plurality of transfer holes 620 may be disposed to be spaced apart from each other in the holder body 610. The plurality of transfer holes 620 may be disposed to individually face the vent holes V of different battery cells 200.

The first alignment member 630 may extend from the first holder body 610 and may be inserted between the adjacent battery cells 200. The first alignment member 630 may align an interval between the battery cells 200 to a size (e.g., a set size). The first alignment member 630 may extend vertically downward from a lower side surface of the first holder body 610. Both, or opposite, side surfaces of the first alignment member 630 may be disposed to respectively surround upper peripheral surfaces of a pair of adjacent battery cells 200. A plurality of first alignment members 630 may be provided. Each of the plurality of first alignment members 630 may be inserted individually between paired adjacent battery cells 200.

The second end portion 412 of the partition 410 may be fixed to the first holder body 610. As an example, the second end portion 412 may be in contact with an upper side surface of the first holder body 610. The second end portion 412 may be fixed to the upper side surface of the first holder body 610 by any of various coupling methods, such as welding, bonding, bolting, fitting, and the like.

Accordingly, the partition 410 may prevent or substantially prevent emissions flowing into a unit chamber 310 from being transferred to an adjacent unit chamber 310 through a lower side of the second end portion 412. In an embodiment, the second end portion 412 is integrally fixed to the first holder body 610, and the partition 410 may be prevented or substantially prevented from deforming due to a pressure increase in the unit chambers 310 if the battery cell 200 ignites.

The battery pack according to the present embodiment may further include a second holder 700.

The second holder 700 is spaced apart from the first holder 600, and may support the plurality of battery cells 200 together with the first holder 600 inside the housing 100.

The second holder 700 may include a second holder body 710 and a second alignment member 720.

The second holder body 710 may be formed to have a shape of a plate that is seated on or under the battery cells 200. As an example, the second holder body 710 may be disposed between the bottom surface of the housing body 110 and the bottom part 211 of the battery cell 200. Upper and lower surfaces of the second holder body 710 may be seated on or against the bottom part 211 of the battery cell 200 and the bottom surface of the housing body 110, respectively.

The second alignment member 720 may extend from the second holder body 710 and may be inserted between the adjacent battery cells 200. The second alignment member 720 may, in conjunction with the first alignment member 630, align a gap between the battery cells 200 to a size (e.g., a set size). The second alignment member 720 may extend vertically upward from an upper side surface of the second holder body 710. Both, or opposite, side surfaces of the second alignment member 720 may be disposed to respectively surround lower peripheral surfaces of a pair of adjacent battery cells 200. A plurality of second alignment members 720 may be provided. Each of the plurality of second alignment members 720 may be inserted individually between the paired adjacent battery cells 200.

Herein, an operation of the battery pack according to the present embodiment will be described.

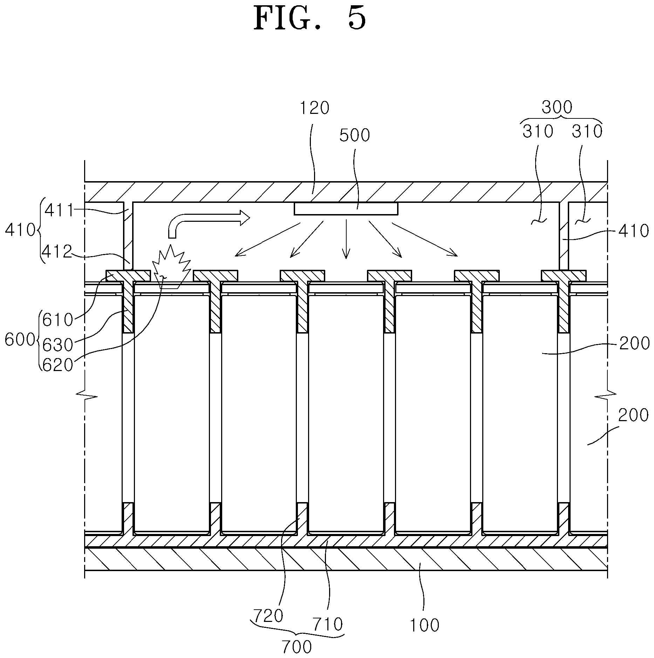

FIG. 5 is a view schematically illustrating an operating state of the battery pack of FIG. 1.

Referring to FIGS. 1 to 5, in an event of thermal runaway or ignition of any one of the battery cells 200, emissions, such as flames, gases, smoke, or the like, discharged from the vent hole V of the battery cell 200 flow into the inside of the unit chamber 310 facing the ignited battery cell 200.

The emissions flowing into the unit chamber 310 flow through the inside of the unit chamber 310, come into contact with the fire-extinguishing member 500, and heat the fire-extinguishing member 500.

When a temperature of the fire-extinguishing member 500 increases above a certain temperature (e.g., a set temperature), the fire-extinguishing member 500 may spray or release fire-extinguishing materials, such as carbon dioxide and steam generated through a pyrolysis reaction, onto the battery cells 200.

From the fire-extinguishing member 500, an internal temperature of the unit chamber 310 may be lowered through the pyrolysis reaction, the steam may suppress the flames inside the unit chamber 310, and the carbon dioxide may block the flames from coming into contact with oxygen or the like. Accordingly, the fire-extinguishing member 500 may delay a propagation speed of flames and heat inside the unit chamber 310 and may suppress the fire of the battery cell 200.

The emissions flowing into the unit chamber 310 that faces the ignited battery cell 200 may not flow into the remaining unit chambers 310 due to the partition 410.

Accordingly, the fire-extinguishing member 500 installed in the unit chamber 310 that does not directly face the ignited battery cell 200 may maintain an initial state thereof without spraying the fire-extinguishing material onto the battery cells 200.

Herein, a battery pack according to another embodiment of the present disclosure will be described.

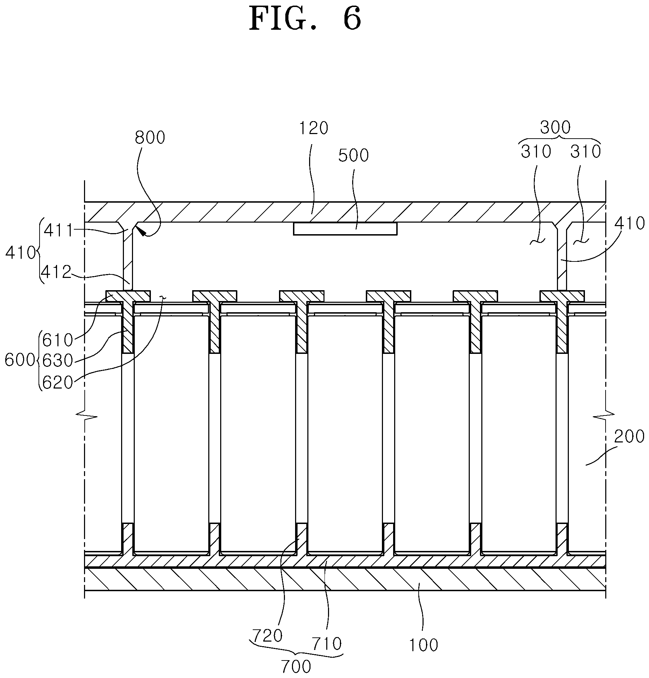

FIG. 6 is a cross-sectional view schematically illustrating a configuration of a battery pack according to another embodiment of the present disclosure.

Referring to FIG. 6, the battery pack according to the present embodiment may be configured to further include a guide member, or guide, 800 as compared to the battery pack of FIG. 1.

The guide member 800 may guide the flow of emissions discharged from the vent hole V toward the fire-extinguishing member 500. Accordingly, the guide member 800 may prevent or substantially prevent the fire-extinguishing member 500 from operating improperly as the emissions discharged from the vent hole V stagnate inside the unit chamber 310 or flow in an unintended direction.

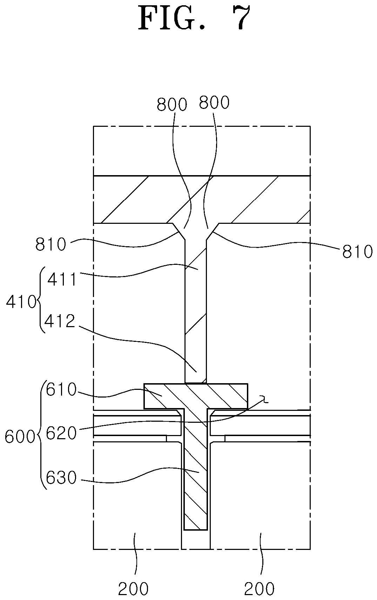

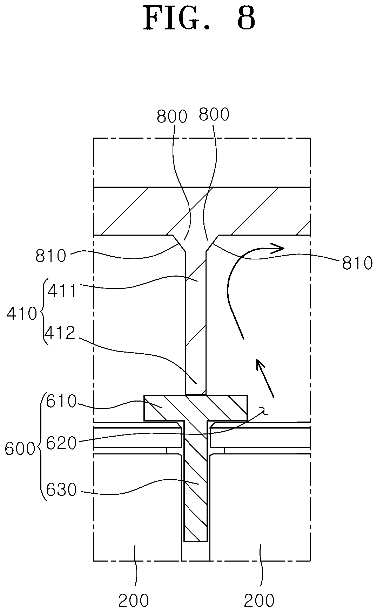

FIG. 7 is an enlarged view schematically illustrating a configuration of a guide member 800 of the battery pack of FIG. 6; and FIG. 8 is a view schematically illustrating an operation of guiding emissions by the guide member 800 of FIG. 7.

Referring to FIGS. 6 to 8, the guide member 800 may be disposed inside the unit chamber 310. As an example, the guide member 800 may be disposed in a corner region formed between the cover 120 and the first end portion 411 of the partition 410 among the entire region of the unit chamber 310.

A plurality of guide members 800 may be provided. Each of the plurality of guide members 800 may be individually installed between the cover 120 and the first end portion 411 of the partition 410.

The guide member 800 may include an inclined surface 810.

The inclined surface 810 may refer to a surface directly facing an internal space of the unit chamber 310 among entire peripheral surfaces of the guide member 800. The inclined surface 810 may be disposed to face the upper side surface of the battery cell 200, in which the vent hole V is formed. The inclined surface 810 may extend to be inclined upward from the partition 410 toward the housing 100, for example, the cover 120. An inclination angle of the inclined surface 810 may be variously changed in design within a range less than 90°.

After being discharged from the vent hole V, the emissions flowing into the corner region formed between the cover 120 and the first end portion 411 of the partition 410 may come into contact with the inclined surface 810.

The emissions coming into contact with the inclined surface 810 may be redirected toward the fire-extinguishing member 500 due to the inclination angle of the inclined surface 810.

Herein, a battery pack according to another embodiment of the present disclosure will be described.

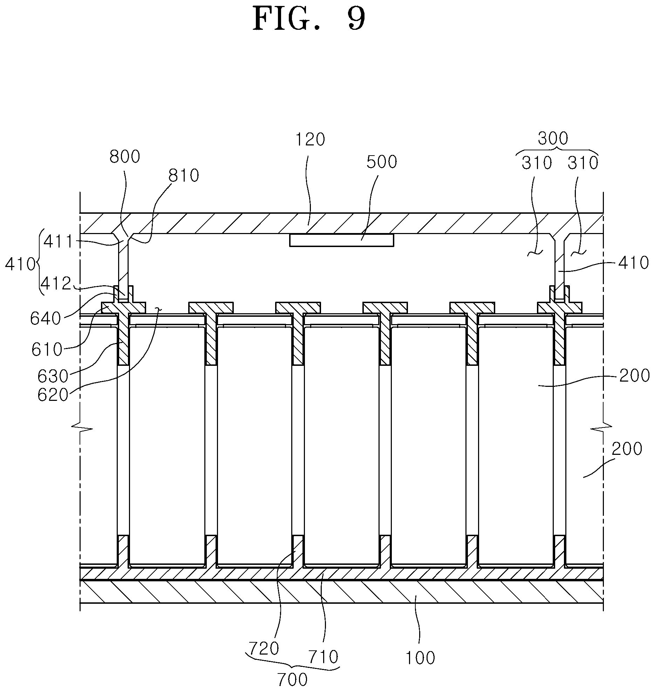

FIG. 9 is a cross-sectional view schematically illustrating a configuration of the battery pack according to another embodiment of the present disclosure.

Referring to FIG. 9, the battery pack according to another embodiment may be configured to differ in a configuration of a first holder 600 from the battery packs of FIGS. 1 and 6.

In FIG. 9, a case in which the battery pack according to the present embodiment includes the guide member 800 is illustrated as an example, but the battery pack according to the present embodiment may also be configured not to include the guide member 800.

The first holder 600 may further include a fixing member 640.

The fixing member 640 may be connected to a first holder body 610 and may support the second end portion 412 of the partition 410. A plurality of fixing members 640 may be provided. The plurality of fixing members 640 may be disposed at positions facing the second end portions 412 of different partitions 410, respectively. The plurality of fixing members 640 may individually support the second end portions 412 of different partitions 410.

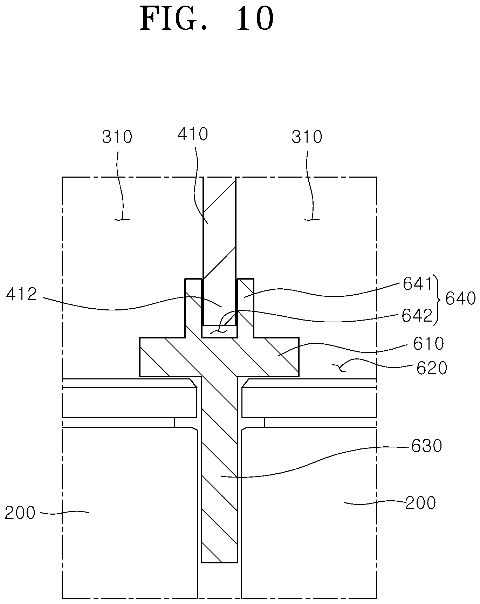

FIG. 10 is an enlarged view schematically illustrating a configuration of a fixing member of the battery pack of FIG. 9.

Referring to FIG. 10, the fixing member 640 may include a fixing body 641 and a fixing groove 642.

The fixing body 641 forms a general appearance of the fixing member 640 and may extend from the first holder body 610. As an example, the fixing body 641 may be formed to have a shape of a rod extending vertically upward from an upper surface of the first holder body 610. The fixing body 641 may be disposed in a position vertically facing the second end portion 412 of the partition 410.

The fixing groove 642 may be disposed inside the fixing body 641 and may provide a space, into which the second end portion 412 is inserted, in the fixing body 641. As an example, the fixing groove 642 may be formed to have a shape of a groove that is recessed downward from an upper side surface of the fixing body 641. In an embodiment, a cross-sectional shape of the fixing groove 642 may be formed to correspond to a cross-sectional shape of the second end portion 412.

The second end portion 412 may be inserted into the fixing groove 642 as the cover 120 is coupled to the housing body 110. Accordingly, the fixing member 640 may prevent or substantially prevent the second end portion 412 from deforming due to an inherent rigidity of the fixing body 641 if the internal pressure of the unit chamber 310 increases due to the ignition of the battery cell 200.

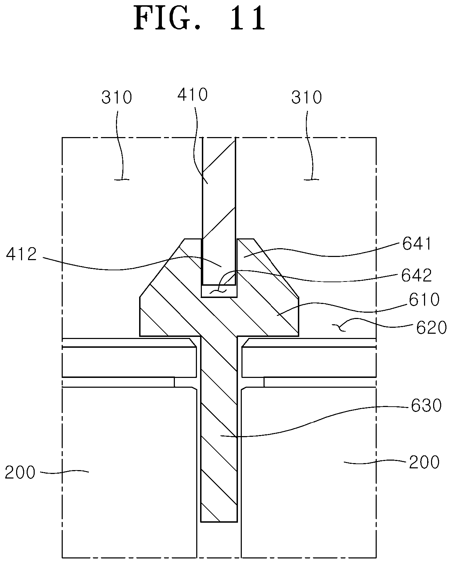

FIG. 11 is a view illustrating another example of the fixing body illustrated in FIG. 10.

Referring to FIG. 11, the fixing body 641 may be formed to increase in cross-sectional area toward the first holder body 610. As an example, a width of a lower end portion of the fixing body 641 may be greater than a width of an upper end portion thereof. Accordingly, the fixing body 641 may more firmly withstand loads applied to the partition 410 due to an increase in an internal pressure of the unit chamber 310.

Herein, a battery pack according to another embodiment of the present disclosure will be described.

The battery pack according to another embodiment of the present disclosure may be configured to differ from the battery pack according to the embodiment of FIG. 9 in a configuration of a fixing member 640.

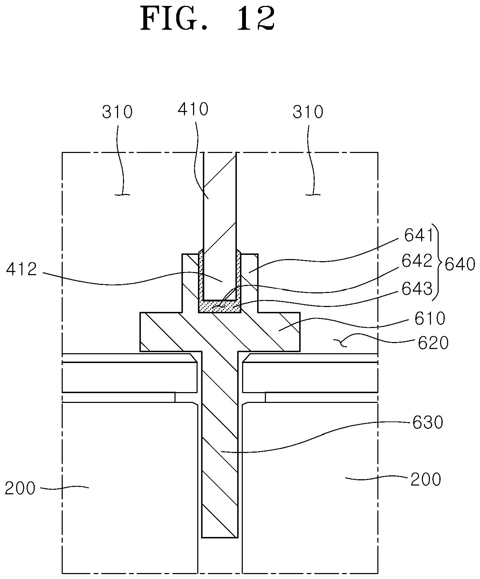

FIG. 12 is a view schematically illustrating a configuration of a fixing member according to another embodiment of the present disclosure.

Referring to FIG. 12, the fixing member 640 according to the present embodiment may further include a sealing member 643.

The sealing member 643 may be disposed inside a fixing groove 642. The sealing member 643 may seal a space between the second end portion 412 and a fixing body 641 inside the fixing groove 642.

The sealing member 643 may be provided to be elastically deformable. As an example, the sealing member 643 may include a flexible material, such as rubber, silicone, or the like. As the second end portion 412 is inserted into the fixing groove 642, the sealing member 643 may be compressively deformed by an elastic restoring force thereof and in close contact with the second end portion 412 and the fixing body 641. Accordingly, the sealing member 643 may block emissions from leaking between the second end portion 412 and the fixing body 641 if the battery cell 200 ignites. In addition, the sealing member 643 may prevent or substantially prevent the second end portion 412 from moving inside the fixing groove 642 due to a clearance between the second end portion 412 and the fixing body 641.

Herein, a battery pack according to another embodiment of the present disclosure will be described.

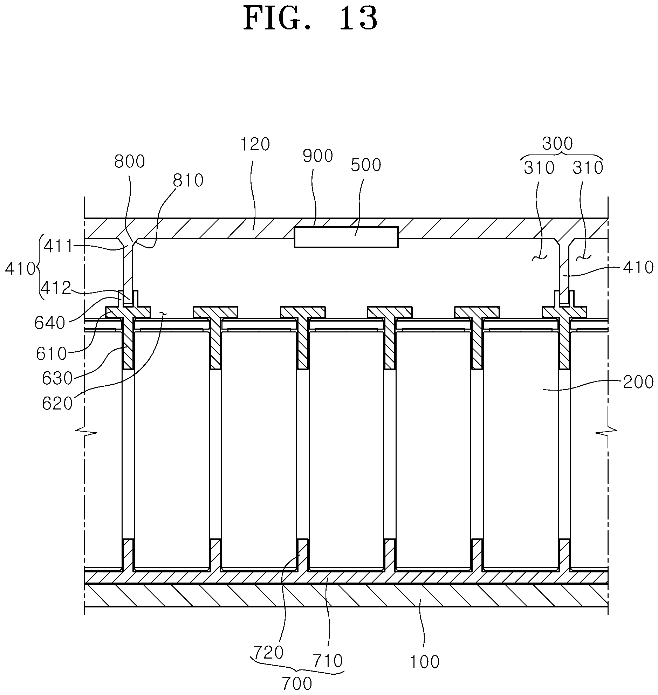

FIG. 13 is a view schematically illustrating a configuration of a battery pack according to another embodiment of the present disclosure.

The battery pack according to another embodiment of the present disclosure may be configured to further include a seating groove 900 as compared with the battery packs according to the previously described embodiments of the present disclosure.

The seating groove 900 may provide a space for the fire-extinguishing member 500 to be seated in the housing 100. Accordingly, the seating groove 900 may prevent or substantially prevent the fire-extinguishing member 500 from being changed in position, such as due to external shock, vibration, or the like.

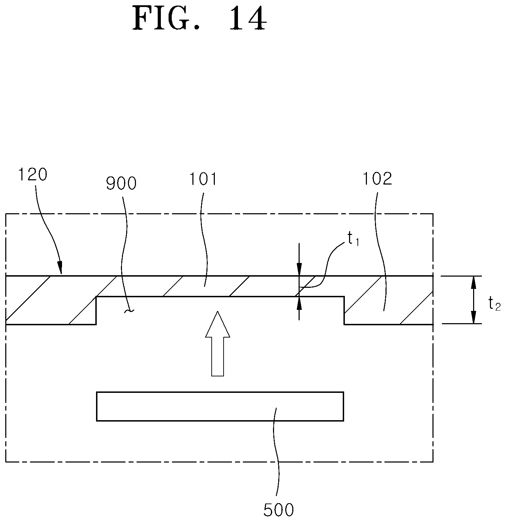

FIG. 14 is a view schematically illustrating a configuration of the seating groove of the battery pack of FIG. 13.

Referring to FIG. 14, the seating groove 900 may be formed to have a shape of a groove that is concavely recessed into the housing 100. As an example, the seating groove 900 may be formed to be recessed upward from a lower side surface of the cover 120. A lower side surface of the seating groove 900 may be disposed to face the unit chamber 310.

The fire-extinguishing member 500 may be inserted into the seating groove 900. The fire-extinguishing member 500 may be fixed inside the seating groove 900 by any of various coupling methods, such as adhesive, fitting, and the like.

In an embodiment, a height of the seating groove 900 may be lower than a height of the fire-extinguishing member 500, and a lower end portion of the fire-extinguishing member 500 may protrude from the seating groove 900 toward the unit chamber 310. Accordingly, the fire-extinguishing member 500 may be fixed in position by the seating groove 900 while securing a sufficient contact area for the emissions flowing into the unit chamber 310.

A plurality of seating grooves 900 may be provided. The plurality of seating grooves 900 may be disposed to individually face different unit chambers 310. The plurality of fire-extinguishing members 500 may be individually inserted into the different seating grooves 900.

The housing 100 may include a first region 101 that faces the seating groove 900, and a second region 102 that does not face the seating grooves 900 and is around (e.g., surrounds) the first region 101.

As the seating groove 900 is formed in the cover 120, the first region 101 may refer to a region of the cover 120, which faces the seating groove 900, among an entire region of the cover 120, and the second region 102 may refer to a region of the cover 120, which excludes the first region 101 from the entire region of the cover 120.

A thickness t₁ of the first region 101 may be less than a thickness t₂ of the second region 102.

In an embodiment, a ratio t₁/t₂ of the thickness t₁ of the first region 101 to the thickness t₂ of the second region 102 may be greater than or equal to 0.3 and less than or equal to 0.5. That is, the thickness t₁ of the first region 101 may be 30% to 50% of the thickness t₂ of the second region 102.

The first region 101 may rupture in response to an increase in pressure or temperature of the unit chamber 310. Accordingly, when the pressure or temperature of the unit chamber 310 increases excessively, the first region 101 may prevent or substantially prevent the partition 410 from breaking and may prevent or substantially prevent unnecessary or undesired motion of the fire-extinguishing member 500, by discharging the emissions flowing into the unit chamber 310 to the outside of the housing 100.

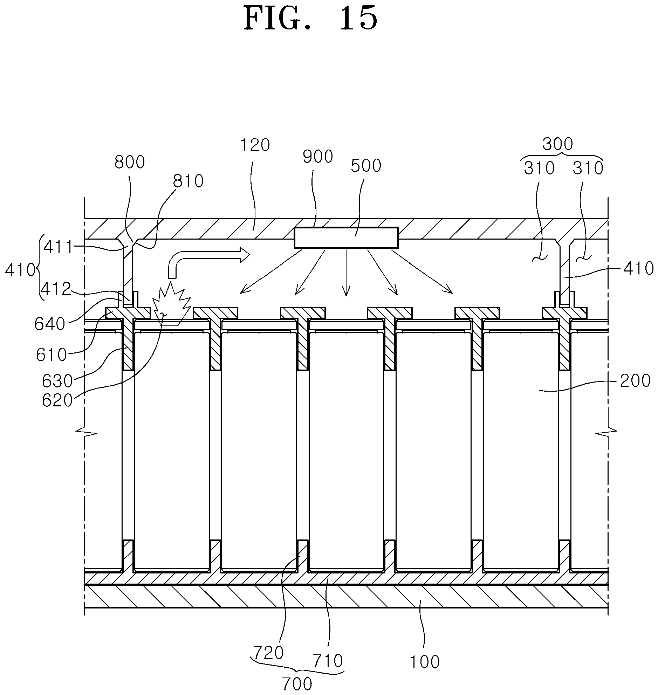

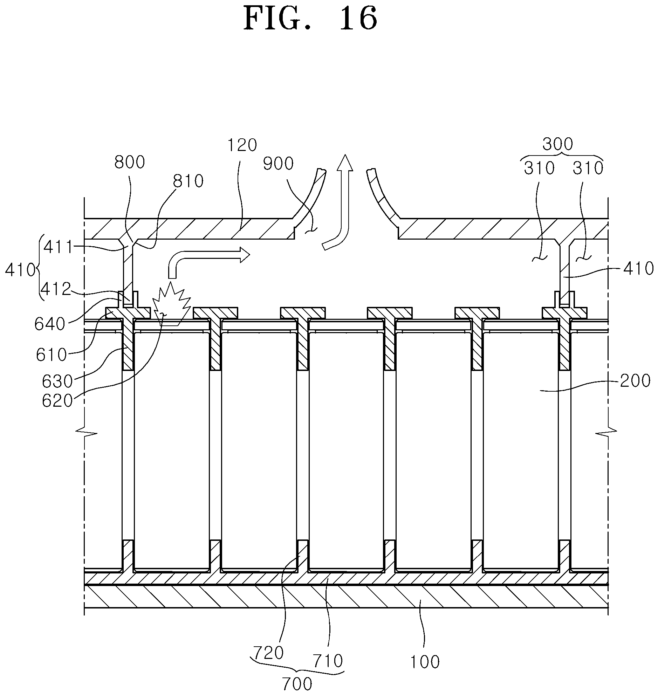

FIGS. 15 and 16 are views schematically illustrating an operation of the battery pack of FIG. 13.

Referring to FIGS. 15 to 16, in an event of thermal runaway or ignition of any one of the battery cells 200, emissions, such as flames, gases, smoke, or the like, discharged from the vent hole V of the battery cell 200 flow into the inside of the unit chamber 310 facing the ignited battery cell 200.

The emissions flowing into the unit chamber 310 flow through the inside of the unit chamber 310, come into contact with the fire-extinguishing member 500, and heat the fire-extinguishing member 500.

As a temperature of the fire-extinguishing member 500 increases above a temperature (e.g., the set temperature), the fire-extinguishing member 500 may spray or release fire-extinguishing materials, such as steam and carbon dioxide (CO₂) generated through a pyrolysis reaction, onto the battery cells 200.

In the fire-extinguishing member 500, an internal temperature of the unit chamber 310 may be lowered through the pyrolysis reaction, the steam may suppress the flames inside the unit chamber 310, and the carbon dioxide may block the flames from coming into contact with oxygen or the like. Accordingly, the fire-extinguishing member 500 may delay a propagation speed of flames and heat inside the unit chamber 310 and may suppress the fire of the battery cell 200.

When the fire in the battery cell 200 is not suppressed even after the fire-extinguishing member 500 has sprayed all of the fire-extinguishing material, or when gases or the like continue to be discharged from the vent hole V, the pressure or temperature in the unit chamber 310 may continue to increase.

As the pressure of the unit chamber 310 increases above a rupture pressure of the first region 101 or the temperature of the unit chamber 310 increases above a melting temperature of the first region 101, the first region 101 may rupture and open the unit chamber 310.

Accordingly, the emissions flowing into the unit chamber 310 may be discharged to the outside of the housing 100 through the rupture portion of the first region 101, and the pressure or temperature of the unit chamber 310 may be maintained below a certain size (e.g., a set size).

According to one or more embodiments of the present disclosure, a plurality of fire-extinguishing members are individually disposed in unit chambers separated from each other by a separation member, such that when a battery cell ignites, fire-extinguishing operations can be prevented or substantially prevented from being performed across the entire battery pack and fire-extinguishing performance for subsequent fires can be secured.

According to one or more embodiments of the present disclosure, a first holder supporting a second end portion of a partition can prevent or substantially prevent deformation and damage to the partition caused by a pressure increase in a unit chamber.

According to one or more embodiments of the present disclosure, after a fire-extinguishing operation by a fire-extinguishing member, rupture of a first region can prevent or substantially prevent the pressure or temperature of a unit chamber from exceeding a certain size (e.g., a set size), such that secondary damage caused by a fire in a battery cell can be prevented or substantially prevented.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery pack comprising:
a housing;
a plurality of battery cells in the housing and each having a vent hole;
a chamber between the housing and the vent hole;
a separation member in the chamber and configured to divide the chamber into a plurality of unit chambers; and
a plurality of fire-extinguishing members each located in a unit chamber of the plurality of unit chambers and configured to supply a fire-extinguishing material to the battery cells.

2. The battery pack as claimed in claim 1, wherein the separation member comprises a plurality of partitions extending from the housing and arranged between the unit chambers adjacent to each other.

3. The battery pack as claimed in claim 2, further comprising a first holder between the chamber and the battery cells and configured to support the partitions.

4. The battery pack as claimed in claim 3, further comprising a second holder spaced apart from the first holder and configured to support the battery cells.

5. The battery pack as claimed in claim 3 or claim 4, wherein the first holder comprises:
a first holder body seated on the battery cells;
a transfer hole passing through the first holder body and facing the vent hole; and
a first alignment member extending from the first holder body and inserted between the adjacent battery cells.

6. The battery pack as claimed in claim 5, wherein
the partition comprises a first end portion connected to the housing and a second end portion opposite to the first end portion, and
the second end portion is fixed to the first holder body.

7. The battery pack as claimed in claim 6, wherein the first holder further comprises a fixing member connected to the first holder body and configured to support the second end portion.

8. The battery pack as claimed in claim 7, wherein the fixing member comprises:
a fixing body extending from the first holder body; and
a fixing groove in the fixing body and in which the second end portion is inserted.

9. The battery pack as claimed in claim 8, wherein the fixing body has a cross-sectional area that increases toward the first holder body.

10. The battery pack as claimed in claim 8 or claim 9, wherein the fixing member further comprises a sealing member in the fixing groove and configured to seal a space between the second end portion and the fixing body.

11. The battery pack as claimed in claim 10, wherein the sealing member is elastically deformable.

12. The battery pack as claimed in any one of claims 2 to 11, further comprising a guide in the unit chamber and configured to guide a flow of an emission discharged from the vent hole toward the fire-extinguishing member.

13. The battery pack as claimed in claim 12, wherein the guide comprises an inclined surface extending to be inclined from the partition toward the housing.

14. The battery pack as claimed in any one of the preceding claims, wherein the fire-extinguishing member is fixed to the housing.

15. The battery pack as claimed in claim 14, further comprising a seating groove facing the unit chamber and concavely recessed into the housing,
wherein the fire-extinguishing member is inserted in the seating groove.
